# EUROPEAN PATENT APPLICATION

(11) **EP 4 123 526 A1**
(43) Date of publication of application: **25.01.2023**
(21) Application number: 21306017.1
(22) Date of filing: 19.07.2021
(51) Int. Cl.: G06Q 10/06, G06Q 10/10

(54) **METHOD AND SYSTEM FOR CALCULATING AND SHARING A USER OCCUPANCY STATUS RELATIVE TO USE OF MULTIMEDIA APPLICATIONS**

(71) Applicant: ALE International, 92700 Colombes (FR)
(72) Inventor: OLIVIER, François, 67115 Plobsheim (FR); HELBERT, Emmanuel, 67140 Andlau (FR); WARICHET, Sebastien, 37270 Montlouis sur Loire (FR)
(74) Representative: BCF Global

(57) **Abstract**

A method and system for calculating and sharing occupancy status of a User (100) consuming at least one Company multimedia application (113, 111) and at least one Third party multimedia application (102, 104) through a User device (101), is provided. It involves analyzing, by a Proxy (105), multimedia data streams (112, 103) associated to respectively each one of the consumed multimedia applications, sending, by the Proxy (105) through a first link (106), statistical and informational data relative to the respective analyzed multimedia data streams to an Occupancy service (107) comprising an Occupancy determinator (108) and an Occupancy provider (109), calculating, by the Occupancy determinator (108), based on an analysis of the sent statistical and informational data, a user occupancy status relative to the use by the User (100) of the at least one Company multimedia application and of the at least one 3rd Party multimedia application, and publishing, by the Occupancy provider (109), the user occupancy status through an API.

## Description

### FIELD

The present technology relates to information technology, more particularly to a method and system for calculating and sharing a user occupancy status relative to use of multimedia applications from at least one user device.

### BACKGROUND

An ever increasing number of applications support users with remote working and collaboration activities. They enable multimedia flow exchanges to support chat, voice and video conferences, webinars, e-learning, etc... Some are made available to employees in the corporate environment. Some others are used by the employees yet are not controlled by the employer, under the form of external services establishing multimedia flows between employees and 3rd party services. In such an environment, it has become difficult to determine the occupancy status of an employee, and by extension of users of applications that are controlled by different parties (for ex: users' employing company, and 3^{rd} party entities relative that that company). "Occupancy status" may for example be status such as "on-line", "available", "idle", "do not disturb", etc.

Moreover, with the variety of applications and increasing technical capabilities of handling different multimedia flows for different purposes, what constitutes an "occupancy status" needs to be refined to new levels of granularity in connection with the user's willingness to accept or not interaction with a second application, while he already is interacting with first one or several other applications. For example, a user while in voice conversation may not want to be interrupted by any other application's incoming sollicitations, yet may accept to chat in writing while attending a webinar. In addition, a user may want to factor in, in its willingness to accept or not interaction with an additional application, the urgency of the application(s) he already is interacting with and/or of the additional application, in the absolute, or relative to the urgency of the application(s) he already is interacting with. Finally, an occupancy status may be also be desired in connection with the mere running of an active application on the user's multimedia device (telephone, tablet, computer, etc.), regardless of the user's actual interaction with that application.

There is therefore a need for a method and system that allows federating multimedia interaction status across as many communication applications and platforms as may be used, into an occupancy status with a higher granularity of states allowing to streamline virtual collaboration between users.

Generally speaking, the present technology aims at analyzing packet streams collected at the network interface of a user's multimedia device, with a view of identifying corresponding multimedia flows, computing an estimation of the kind of multimedia interaction the user is involved with, deriving a corresponding occupancy status, and making this information available to authorized third parties.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

Embodiments of the present technology have been developed based on developers' appreciation of shortcomings associated with the prior art. Various implementations of the present technology provide a system for calculating and sharing occupancy status of a User consuming a Company multimedia application and a Third party multimedia application through a User device, with the system comprising an Occupancy service coupled to a Proxy, wherein the Proxy is configured to:
- analyze multimedia data streams associated to respectively each one of the consumed multimedia applications; and
- send statistical and informational data relative to the respective analyzed multimedia data streams to the Occupancy service through a first link;
and wherein the Occupancy service comprises:
- an Occupancy determinator configured to calculate, based on an analysis of the sent statistical and informational data, a user occupancy status relative to the use by the User of the Company multimedia application and of the 3^{rd} Party multimedia application; and
- an Occupancy provider configured to publish the calculated user occupancy status through an API.

In aspects of the present system, the User device comprises:
- a Company collaborative client configured to, when interfacing with a Company collaborative platform through a second link, enable the User to consume the Company multimedia application; and
- a 3^{rd} Party multimedia application configured to, when interfacing with a 3^{rd} Party multimedia service through a third link, enable the User to consume the 3^{rd} Party multimedia application;
and the Proxy is further configured to analyze multimedia data streams transported respectively on the second and the third link.

In aspects of the present system, the Occupancy determinator comprises a Detection method selector configured to:
- analyze the sent statistical and informational data on the first link;
- select, based on the analyzing the sent statistical and informational data on the first link, at least one option in a set of options for inferring a type of stream for each of the respective analyzed multimedia data streams; and
- send the respective types of stream to a Stream-occupancy converter;
wherein the Stream-occupancy converter is configured to convert the sent respective types of streams into the user occupancy status.

In aspects of the present system, the set of options comprises inferring the type of stream for each of the respective analyzed multimedia data streams by a trained Neural Network, NN, wherein the NN is configured to be fed statistical data relative to respectively an inbound and an outbound stream for each of the respective analyzed multimedia data streams, wherein the NN comprises:
- a first layer of two parallel Convolutional Neural Networks, CNNs, for the fed statistical data of each of the inbound and the outbound streams, a first of the two parallel CNNs being configured to detect features related to patterns of the fed statistical data, a second of the two parallel CNNs being configured to detect features related to average of the fed statistical data;
- a second layer of one CNN configured to detect features related to a combination of patterns and average of the fed statistical data for both the inbound and the outbound streams; and
- a classifier configured to associate a probability to each type of stream in a predetermined set of types of stream, and infer the type of stream by selecting the type of stream with the highest probability.

In aspects of the present system, the set of options further comprises inferring the type of stream for each of the respective analyzed multimedia data streams by a first Compare function, wherein the first Compare function is configured to be fed informational data relative to each of the respective analyzed multimedia data streams, compare the fed informational data with a predetermined set of first criteria, and infer the type of stream by matching the fed informational data with the first criteria.

In aspects of the present system, the Proxy is configured to analyze the current status of multimedia elements on User device, and send status information relative to the multimedia elements through the first link, and wherein the set of options further comprises inferring the type of stream for each of the respective analyzed multimedia data streams by a second Compare function, wherein the second Compare function is configured to be fed the status information relative to the multimedia elements, compare the status information relative to the multimedia elements with a predetermined set of second criteria, and infer the type of stream by matching the status information relative to the multimedia elements with the second criteria.

In aspects of the present system, the Stream-occupancy converter is configured to convert the sent respective types of streams into the user occupancy status by comparing the sent respective types of streams with a predetermined set of third criteria, and matching the sent respective types of streams with the third criteria.

In aspects of the present system, the predetermined set of third criteria is updated through the API.

In aspects of the present system, the API comprises at least:
- an Access and Authentication command configured to enable the Company collaborative platform to start a session with the Occupancy service toward obtaining the calculated user occupancy status;
- a first Getter command configured to enable the Company collaborative platform to request of the Occupancy service to return a unique OS_ID for the User associated with a Temp ID computed by the Company collaborative platform;
- a second Getter command configured to enable the Company collaborative platform to request of the Occupancy service the calculated user occupancy status; and
- a Notifier command configured to enable the Occupancy service to notify the Company collaborative platform the calculated user occupancy status.

Various implementations of the present technology provide a Proxy configured to:
- analyze multimedia data streams exchanged respectively between a Company collaborative client of a User device and a Company collaborative platform, and a Company multimedia application of the User device and a Third party multimedia application, associated to respective multimedia applications consumed by a User using the User device;
- receive from the Company collaborative platform an identification (OS_ID) anonymously associated with the User; and
- send statistical and informational data relative to the respective analyzed multimedia data streams to an Occupancy service in association with the received identification.

Various implementations of the present technology provide a method for calculating and sharing occupancy status of a User consuming at least one Company multimedia application and at least one Third party multimedia application through a User device, the User device comprising a Company collaborative client configured to, when interfacing with a Company collaborative platform through a second link, enable the User to consume the Company multimedia application, and a 3^{rd} Party multimedia application configured to, when interfacing with a 3^{rd} Party multimedia service through a third link, enable the User to consume the 3^{rd} Party multimedia application, wherein the method comprises:
- analyzing, by a Proxy, multimedia data streams transported respectively on the second and the third link and associated to respectively each one of the consumed multimedia applications;
- sending, by the Proxy through a first link, statistical and informational data relative to the respective analyzed multimedia data streams to an Occupancy service, comprising an Occupancy determinator and an Occupancy provider;
- calculating, by the Occupancy determinator, based on an analysis of the sent statistical and informational data, a user occupancy status relative to the use by the User of the at least one Company multimedia application and of the at least one 3rd Party multimedia application; and
- publishing, by the Occupancy provider, the user occupancy status through an API.

In aspects of the present method, the Occupancy determinator comprises a Detection method selector, and the method further comprises:
- analyzing by the Detection method selector the sent statistical and informational data on the first link;
- selecting by the Detection method selector, based on the analyzing the sent statistical and informational data on the first link, at least one option in a set of options for inferring a type of stream for each of the respective analyzed multimedia data streams; and
- sending by the Detection method selector, the respective types of stream to a Stream-occupancy converter; and
- converting by the Stream-occupancy converter the sent respective types of streams into the user occupancy status.

In aspects of the present method, the set of options comprises inferring the type of stream for each of the respective analyzed multimedia data streams by a trained Neural Network, NN, wherein the NN is configured to be fed statistical data relative to respectively an inbound and an outbound stream for each of the respective analyzed multimedia data streams, wherein the NN comprises:
- a first layer of two parallel Convolutional Neural Networks, CNNs, for the fed statistical data of each of the inbound and the outbound streams, a first of the two parallel CNNs being configured to detect features related to patterns of the fed statistical data, a second of the two parallel CNNs being configured to detect features related to average of the fed statistical data;
- a second layer of one CNN configured to detect features related to a combination of patterns and average of the fed statistical data for both the inbound and the outbound streams; and
- a classifier configured to associate a probability to each type of stream in a predetermined set of types of stream, and infer the type of stream by selecting the type of stream with the highest probability.

In aspects of the present method, the set of options further comprises inferring the type of stream for each of the respective analyzed multimedia data streams by a first Compare function, wherein the first Compare function is configured to be fed informational data relative to each of the respective analyzed multimedia data streams, compare the fed informational data with a predetermined set of first criteria, and infer the type of stream by matching the fed informational data with the first criteria.

In aspects of the present method, the Proxy is configured to analyze the current status of multimedia elements on User device, and send status information relative to the multimedia elements through the first link, and wherein the set of options further comprises inferring the type of stream for each of the respective analyzed multimedia data streams by a second Compare function, wherein the second Compare function is configured to be fed the status information relative to the multimedia elements, compare the status information relative to the multimedia elements with a predetermined set of second criteria, and infer the type of stream by matching the status information relative to the multimedia elements with the second criteria.

In the context of the present description, unless expressly provided otherwise, a system, may refer, but is not limited to, an "electronic device", an "operation system", a "computing system", a "computer-based system", a "controller unit", a "monitoring device", a "control device" and/or any combination thereof appropriate to the relevant task at hand.

In the context of the present specification, the expression "FPGA" is intended to include Field Programmable Gate Array computing systems, available on the market at the time of filing this patent application, such as references Xilinx VU9P, or Intel Stratix V, and any subsequent equivalent technologies becoming available, regardless of their name, consisting in computing system hardware programmable with software.

In the context of the present description, the expression "processor" in intended to include a single dedicated processor, a single shared processor, or a plurality of individual processors, some of which may be shared. In some aspects of the present technology, the processor may be for example a general purpose processor, such as a central processing unit (CPU), a processor dedicated to a specific purpose, or a processor implemented in a FPGA. Other hardware, conventional and/or custom, may also be included.

In the context of the present specification, "user device" is any computer hardware that is capable of running software appropriate to the relevant task at hand. Thus, some (non-limiting) examples of user devices include personal computers (desktops, laptops, netbooks, etc.), smartphones, and tablets, etc. It should be noted that a device acting as a user device in the present context is not precluded from acting as a server to other user devices. The use of the expression "a user device" does not preclude multiple user devices being used in receiving/sending, carrying out or causing to be carried out any task or request, or the consequences of any task or request, or steps of any method described herein.

In the context of the present specification, a "database" or "DB" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "dataset" includes information of any nature or kind whatsoever capable of being stored in a database. Thus information includes, but is not limited to audiovisual works (images, movies, sound records, presentations, etc.), data (location data, numerical data, etc.), text (opinions, comments, questions, messages, etc.), documents, spreadsheets, lists of words, etc.

In the context of the present specification, the expression "component" is meant to also include software (appropriate to a particular hardware context) that is both necessary and sufficient to achieve the specific function(s) being referenced.

In the context of the present specification, the expression "computer usable information storage medium" is intended to include media of any nature and kind whatsoever, including RAM, ROM, disks (CD-ROMs, DVDs, floppy disks, hard drivers, etc.), USB keys, solid state-drives, tape drives, etc.

In the context of the present description, the functional steps shown in the figures, may be provided through the use of dedicated hardware, as well as hardware capable of executing software in association with appropriate software.

In the context of the present description, unless expressly provided otherwise, the words "first", "second", "third", etc. have been used as adjectives only for the purpose of allowing for distinction between the nouns that they modify from one another, and not for the purpose of describing any particular relationship between those nouns.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 depicts a network and communication environment in which the present technology may be used;
Figures 2a and 2b detail a sequence of messages exchanged between certain elements of the network and communication environment of Figure 1;
Figure 3 details the Occupancy service of Figure 1;
Figure 4 describes a possible architecture of a Neural Network which may be used in the present technology;
Figure 5 depicts a method that may be used in the present technology; and
Figure 6 details a computing system that may be used in the present technology.

It should be noted that, unless otherwise explicitly specified herein, the drawings are not to scale. Further, elements that are identical from one figure to the next share the same reference numerals.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in computer usable information storage media and so executed by a computer or processor, whether or not such computer or processor is explicitly shown.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present technology.

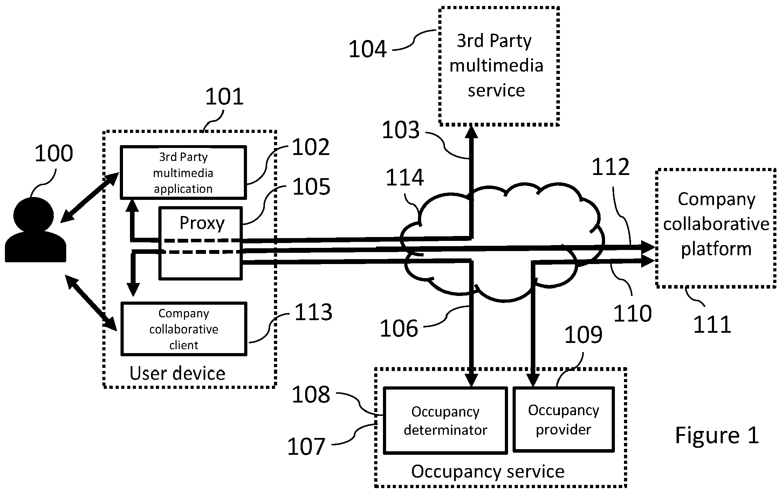

Figure 1 depicts a network and communication environment in which the present technology may be used. A User 100 may interact with a User device 101. The User 100 may be related to a Company from a business perspective, for example as an employee, an associate, an owner etc., that controls at least a Company collaborative client 113 on the User device 101. Company collaborative client 113 may interface with a Company collaborative platform through a link 112, also controlled by the Company, which together may allow User 100 to consume Company multimedia applications as the case may be, and to perform remote working and collaboration. For example, a Company application may be the application Rainbow(TM) (https://www.al-enterprise.com/en/rainbow). Link 112 may be a secure link to convey signaling information (login, commands, notifications etc.), as well as multimedia data streams, as the case may be, to the Company collaborative platform 111, after being trusted by User device 101.

User device 101 may also run a 3^{rd} Party multimedia application 102, not controlled by the Company, which may interface with a 3^{rd} Party multimedia service 104 through a link 103, also allowing the User 100 to consume 3rd Party multimedia applications as the case may be, and perform remote working and collaboration. Link 103 may be a secure link to convey signaling information (login, commands, notifications etc.), as well as multimedia data streams, as the case may be, to the 3^{rd} Party multimedia service 104, after being trusted by User device 101. In both cases of the Company collaborative client 113 and of the 3^{rd} Party Multimedia application 102, any embedded multimedia application may for example be a dedicated application, a fat client running on User Device 101, or a light/thin client, for example a web application on a web browser. The Company collaborative platform 111 and of 3^{rd} Party multimedia service 104 may run in a cloud 114.

Proxy 105 is a function that, with sufficient administrative rights, may analyze all data streams incoming to, and outgoing from, User device 101, such as on links 112 and 103. Multimedia data streams may for example be monodirectional or bidirectional audio and/or video streams. They may correspond to services such as videoconference, webinar, online training, one-on-one conversation, chat, etc... Proxy 105 may analyze multimedia data streams, and make this analysis, for example under the form of related statistical and informational data, available on a link 106. For example, part or all of the three following types of information may be present on the link 106, in particular depending on the administrative capability of Proxy 105 to collect such information:
- description of the streams on links 112 and 103: for example, made of the Fully Qualified Domain Name (FQDN) of the stream endpoints, and/or the type of multi-media protocol and multimedia coding used in the streams, for instance, RTP transporting H.264 video samples;
- audio and video status of multi-media accessories (ex: microphone, loudspeaker, camera, etc.) used on the User device 101;
- statistics for the streams on links 112 and 103: for example comprising the inbound and outbound data throughput by unit of time and by logical connection.

All three types of information are associated to an identification of both the User 100, and of the User device 101 associated with the Proxy 105.

For example, the statistical and informational data available on the link 106 may be formatted according to a json grammar as follows:

```
 "user id": "uid",
 "device id": "did",
 "data": {
       "media description" :
       {
               "stream" : [
               {
                      "streamId" : "1",
                      "introspection feasible" : "true",
                      "endpoint" : "youtu.be",
                      "session protocol" : "SIP",
                      "transport protocol" : "RTP",
                      "media" : "audio, video",
                      "coding" : "H264"
                      },
               ],
               }
       "audio description" :
       {
               "process" : [
               {
                      "name": "firefox",
                      "camera" : "off',
                      "mic" : "on",
                      "loudpeaker" : "on"
               },
               {
                      "name": "krisp",
                      "camera" : "off',
                      "mic" : "on",
                      "loudpeaker" : "off"
               },
               ]
       }
       "stream statistics" :
               "stream" : [
                      }
                "streamId" : "2",
                             "endpoint" : "192.168.10.1",
                             "inbound" : [
                                     {
                                    "time" : "0.0",
                                    "bytes" : "412788"
                                     },
                                     {
                                    "time" : "0.1",
                                    "bytes" : "412788"
                                     },
                                     {
                                    "time" : "0.2",
                                    "bytes" : "412788"
                                     },
                                     {
                                    "time" : "0.3",
                                    "bytes" : "412788"
                                     },
                                     {
                                    "time" : "0.4",
                                    "bytes" : "412788"
                                    },
                             ]
                      }
               ],
       }
 }
```

Even though represented Figure 1 within User device 101, the skilled person will appreciate that Proxy 105 function, still associated with the User device 101, could be at least partly provided by a service remotely located in a private or public cloud, still within the teachings of the present disclosure. In the latter case (public cloud), a cloud player such as Zscaler may offer such a service. In such a case Proxy 105 within User device 101 could be reduced to a minimal service redirecting all multimedia data streams toward this cloud service.

Through link 106, Proxy 105 may provide the statistical and informational data to an Occupancy service 107. Occupancy service 107, also a service which may be deployed in the Cloud 114, may have two main functions:
- an Occupancy determinator 108, which may receive through link 106, the statistical and informational data to be analyzed so as to calculate User 100 occupancy status relative its use of any 3^{rd} Party multimedia applications in 3^{rd} Party multimedia service 104, and/or of any Company applications in Company collaborative platform 111; and
- an Occupancy provider 109, which may publish this occupancy status, and as the case may be, make it available through APIs, for example to the Company collaborative platform 111, with a link 110. Occupancy provider 109 may also, through the APIs, make the occupancy status information available to other services, companies, etc. that will have subscribed to the service provided by the Occupancy service 107.

Company collaborative platform 111 may publish User 100 occupancy status to authorized users (not shown), for example other employees of the Company and/or contacts of User 100. Company collaborative platform 111 may also be controlled by a telecom carrier, in which case it may publish occupancy status through for example API at reference point T8 over SCEF.

As an illustration of an actual scenario in relation to Figure 1: User 100 may be running Rainbow (TM) as a Company application in Company collaborative platform 111, while at the same time attending a webinar running on 3^{rd} Party multimedia service 104 through its web browser. Proxy 105 may compute statistical data relative to the multimedia data stream traffic generated by both applications and available on links 112 and 103. Based for example on identification of the destination IP addresses in the streams (that of User device 101, of 3^{rd} Party multimedia service 104 and of Company collaborative platform 111), each multimedia data stream may be viewed as a pair of streams, one incoming to, and one outgoing from, User device 101. The statistical data may consist in measuring for example: (i) the origin and destination of the packets, incoming and outgoing, and (ii) for each stream in the pair, the mean size of the packets, the number of bytes exchanged over a sliding window, the periodicity if any, the direction (from or to User device 101), the network protocol if recognizable, etc. These statistical data may be sent on a regular basis to the Occupancy service 107, together with User 100 identification so as to link the statistical data to usage of applications by User 100. Occupancy service 107 may thus calculate an occupancy status for User 100, and make it available to Company collaborative platform 111 through link 110. As the User 100 identification is also conveyed to Company collaborative Platform 111 by Company collaborative client 113 through link 112, the occupancy status may be linked to User 100 and be published accordingly by Company collaborative platform 111 for the benefit of authorized users (not shown).

In one aspect of the present technology, the User 100 may use two or more User devices 101 (not shown) to consume Company and/or 3rd Party multimedia applications. Occupancy status may be calculated and published as being tightly linked, as seen below, also to a User 100 identification.

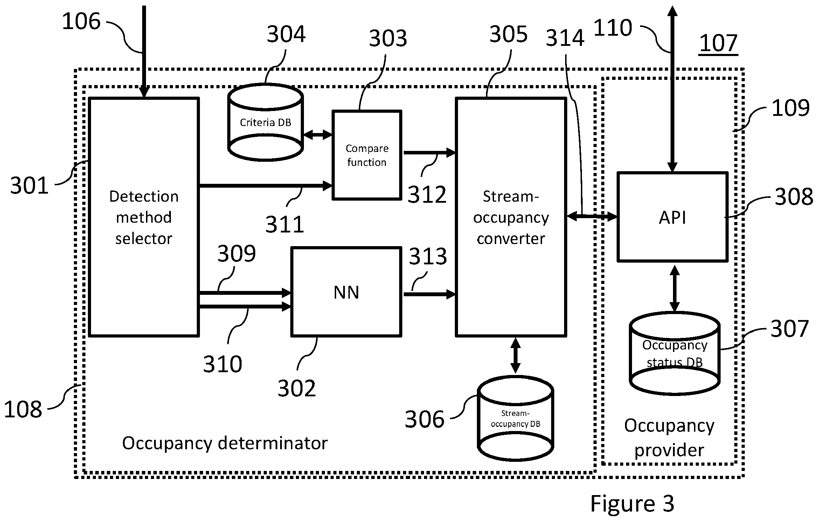

Turning to Figure 3, details are provided of the Occupancy service 107. Through link 106, the statistical and informational data provided by Proxy 105 may be received by a Detection method selector 301. With a view of estimating which kind of multimedia application User 100 is consuming, and what level of occupancy the consumption amounts to, statistical and informational data are exploited depending on the ability (technically and legally permitted) to introspect them.

The Detection method selector 301 may analyze the statistical and informational data available on link 106, and select one or several among at least three options, as totally or partly cumulative or alternative aspects of the present technology, of inferring User 100 activity relative to multimedia applications:
- a first available such option may be to detect multimedia-related activity with multimedia elements such as the microphone, loudspeaker, and/or camera, of the User device 101. This may for example be performed by implementing OS platform API such as *AudioRecord* or *AudioManager* objects from Android API which, when used in a dedicated program running in Proxy 105, may give the current status of use of these multimedia elements (see for example: https://stackoverflow.com/questions/35633513/how-to-check-whether-microphone-is-used-by-any-background-app). Other means for detecting and reporting the use of such multimedia elements may be available to the person skilled in the art.
- a second available such option, when introspection is possible, may be to determine the type of media transported by the data packets on links 103 and 112 on Figure 1. Introspection may not be possible if the streams are encrypted on links 103 and 112. Introspection may be possible if the Proxy 105 has access to the data packet protocol headers on those links. Further, if the traffic is detected from and to a specific URL/FQDN, the web site may be able to be categorized, and associated to a type of multimedia activity: for example e-learning, communication platform (like tele or visio conference), video streaming etc.
- a third available such option, is an AI-related analysis, for example, as more fully described below, using a Neural Network (NN) trained so as to recognize the types of stream under the form of data packets on links 103 and 112 on Figure 1.

To that effect the Detection method selector 301 may extract from the statistical and informational data available on link 106, relevant data made available on respectively links 311 and 309/310, for example:
- on link 311:
   - a current status of use of multimedia elements on User device 101 (if first option above is available); and/or
   - a description of the type of streams on links 112 and 103 (if the second option is available);
- on link 309: inbound statistics for the streams on links 112 and 103 (if the third option is available); and/or
- on link 310, outbound statistics for the same (if the third option is available).

If the first option is determined by the Detection method selector 301 to be available, the status of use of multimedia elements on User device 101 available on link 311 may be compared by a Compare function 303 to entries of a Criteria DB 304. Criteria DB 304 may store criteria such as for example types of multimedia elements, and activation combination thereof, which may be used to infer a type of stream made available on link 312. This first option may be used in conjunction with the second option above to confirm an assumption made about a type of stream. For example, the following criteria in Criteria DB 304 may correspond to a type of stream when matched by Compare function 303:

**Table 1A: examples of matching criteria for determining types of stream for the first option**

| **Criteria in DB 304** | **Type of stream inferred by Compare 303 and made available on link 312, when criteria met** |
|---|---|
| Microphone, camera and loudspeaker activated | Real time bidirectional audio and/or video |
| Microphone and camera deactivated but loudspeaker activated | Streaming audio or video |

If the second option is determined by the Detection method selector 301 to be available, the description of the streams available on link 311 may be compared by the Compare function 303 to entries of the Criteria DB 304. Criteria DB 304 may store criteria such as for example type of media, destination and direction, networking protocol etc. which may be used to infer a type of stream made available on link 312. For example, the following criteria in Criteria DB 304, may correspond to a type of stream when matched by Compare function 303:

**Table 1B: examples of matching criteria for determining types of stream for the second option**

| **Criteria in DB 304** | **Type of stream inferred by Compare 303 and made available on link 312, when criteria met** |
|---|---|
| SIP or other telecom protocol + RTP protocols | Real time bidirectional audio and/or video |
| RTSP protocol | Video on demand |
| HTTP and YouTube DNS originator | Streaming video |

It will be apparent by the person skilled in the art that criteria in Criteria DB 304 may be determined and input by human intervention, such as by the designers of the Occupancy determinator 107. They may be dynamically or statically input and updated, or hardcoded in the Compare function 303.

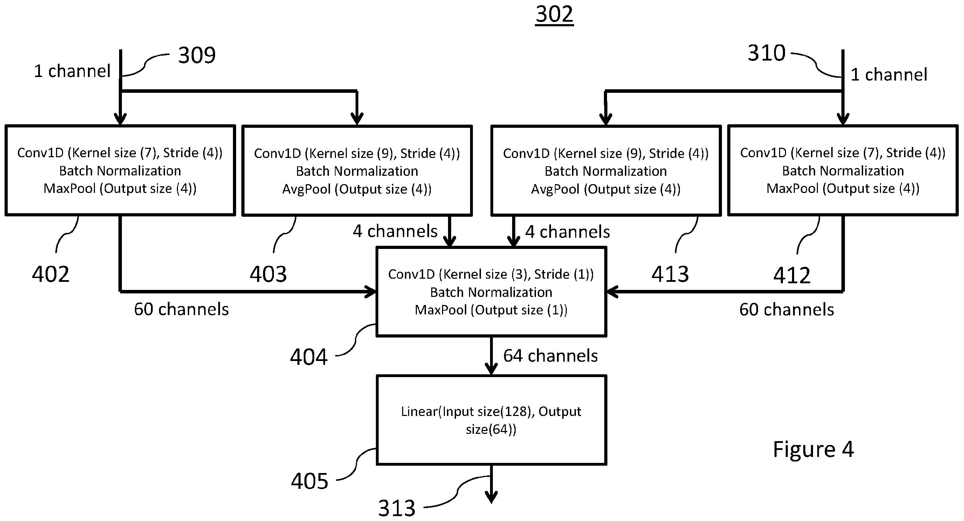

To address the third option above, when available as determined by the Detection method selector 301, inbound stream statistics 309 and outbound stream statistics 310 may input a NN 302. A type of stream as calculated by NN 302 may thus be available on link 313. The NN 302, its architecture and training are more fully described below in relation to Figure 4.

Links 312 and/or 313 may provide types of streams to a Stream-occupancy converter 305. The Detection method selector 301 may activate link 312 and/or 313 depending on which one(s) of the options above may be available. Stream-occupancy converter 305 may use these types of streams to convert them into an occupancy status, made available on link 314. The type of stream-occupancy conversion may for example, in a first aspect of the present technology, be based on lookup information stored in a Stream-occupancy DB 306, or in a second aspect, be based on a rules engine.

In the first aspect of the present technology, the Stream-occupancy DB 306 may be populated with lookup information providing a correspondence between type(s) of stream, and an occupancy status, which may be determined and input by human intervention, such as by the designers of the Occupancy determinator 107. Such a correspondence may be dynamically or statically input and updated (for example using a REST API), or hardcoded in the Stream-occupancy converter 305. For example, the following types of stream in Stream-occupancy DB 306, may yield the following occupancy status when looked-up by Stream-occupancy converter 305:

**Table 2: examples of types of stream corresponding to occupancy status**

| **Type of stream** | **(suspected application/activity)** | **Corresponding occupancy status** |
|---|---|---|
| Real time bidirectional audio and/or video | Live audio and/or video conference | Busy, do not disturb with real time media, do not disturb with message |
| Real time monodirectional audio and video | Webinar | Busy, use chat or mail for urgent matters |
| Streaming video | Training on replay | Busy, can be called for urgent matters |
| Streaming audio | Music in streaming | Not busy |
| Video on demand | Movie | Not busy |

It will be apparent to the person skilled in the art that, through the present technology, the corresponding occupancy status may be tailored to organizations and their policies, having subscribed to the Occupancy service 107, and even to individual Users 100. For example, for the same type of stream, an organization will want a given corresponding occupancy status that may be different from that of another organization, for all of its related personnel, or depending on given groups of persons in the organization. Further the corresponding occupancy status may be finely tuned, for example for the same type of stream, depending on the time of the day.

In the second aspect of the present technology, the type of stream-occupancy conversion may be based on a rules engine. For example a "Drools" application (https://www.drools.org/) may be used. Such an engine may use information describing streams as input parameters to compute a suite of rules on these inputs and generate the corresponding occupancy state. For example, a rule may be:
- if music stream is detected, then the Occupancy is "not busy".
More complex rules may also be used, for example:
- if training is detected and volume is muted, then the occupancy is "not busy";
- if training is detected but the training platform is not authorized by the employee company, then the occupancy is "not busy";
- if User device 101 microphone is activated but loudspeaker is muted and the application using the microphone appears in a list of applications in Criteria DB 304, then occupancy is "not busy".

An occupancy status associated to the User 100 may be available on link 314, which may both be stored in an Occupancy status DB 307, in association with User 100, and made available on link 110 through an API 308. Occupancy status DB 307 thus may contain a table with the up-to-date occupancy status for each user of the Company collaborative platform 111 provided by the company, such as a company's employee. Occupancy status information on link 110 may be made available not only to the Company collaborative platform 111, but to other such collaborative platforms as deployed by other companies having subscribed to the Occupancy service 107. Details of the API 308 in one aspect of the present technology are provided below.

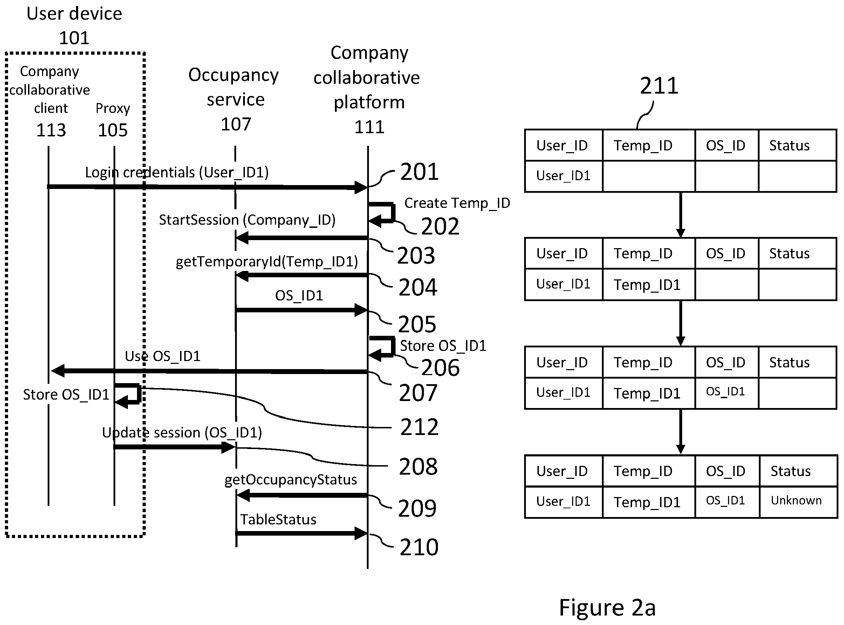

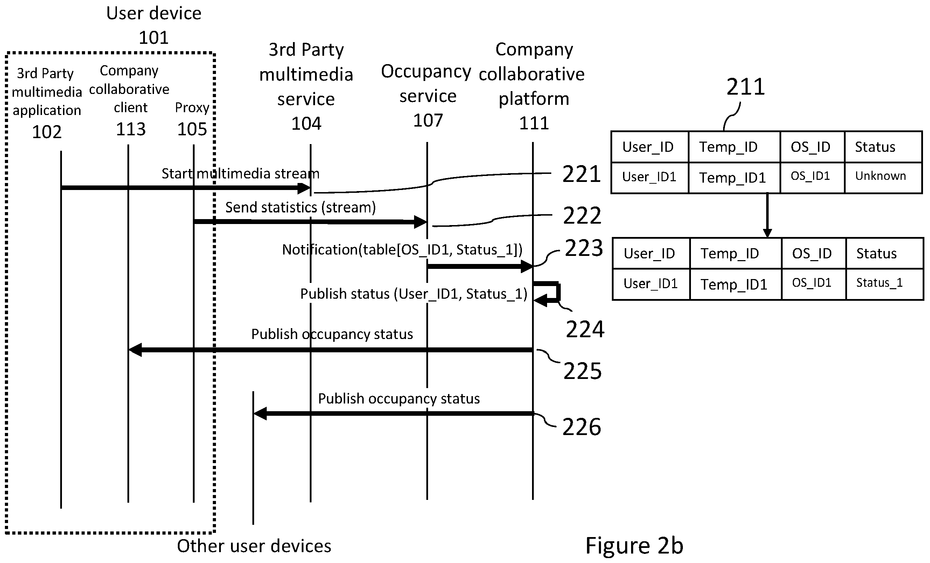

We will now turn to Figures 2a and 2b detailing a sequence of messages exchanged between the User device 101, the Occupancy service 107, the Company collaborative platform 111, and the 3^{rd} Party multimedia service 104. This sequence may be followed to make the necessary associations between user/user device identifications with the conveyed data and statuses, while at the same time, ensuring a level of security and confidentiality for User 100.

Turning to Figure 2a, with message 201 sent by Company collaborative client 113 in User device 101 to the Company collaborative platform 111, User 100 may login the Company collaborative platform 111, using its User_ID1. At this point, User 100 may get access to a Company multimedia application. At step 202, Company collaborative platform 111 may generate a Temp_ID1 associated to User_ID1 (as represented in a database 211, which may for example be maintained in Company collaborative platform 111 (not shown on Figure 1)).

With message 203 sent by the Company collaborative platform 111 to the Occupancy service 107, the Company collaborative platform 111 may identify itself with a Company_ID. The Company_ID may for example have been previously assigned by the Occupancy service 107 upon the Company subscribing to the service.

With messages 204 and 205 exchanged between the Company collaborative platform 111 and the Occupancy service 107, the Company collaborative platform 111 may obtain from the Occupancy service 107 an identification OS_ID1 associated to Temp_ID1 and associated to User_ID1 (as seen in database 211). At step 206 OS_ID1 may be stored by the Company collaborative platform 111 in database 211.

With message 207 sent by the Company collaborative platform 111 to the Company collaborative client 113 in User device 101 through the link 112, OS_ID1 may be made known to Company collaborative client 113. Proxy 105 may simultaneously be made aware that all statistical and informational data gathered from links 112 and 103, may be associated with OS_ID1. Several means may be implemented to enable the Company collaborative platform 111 to communicate with Proxy 105. In an aspect, a special HTTP network message with a special html content may be recognized by Proxy 105 through introspection. With step 212, Proxy 105 may store in a local database (not shown) the value of OS_ID1 so that it may include this value in every subsequent statistical and informational data sent to Occupancy Service 107 over link 106.

At this point, Proxy 105 may indicate to the Occupancy Service 107 over link 106, in an Update Session message 208 that upcoming informational and statistical data issued by Proxy 105 shall be associated with the identifier [OS_ID1]. Thus, identity isolation and security are ensured by:
- Proxy 105 not being aware of Temp_ID or User_ID;
- the Occupancy service 107 not being aware of User_ID.
The Occupancy Service 107 may associate informational and statistical data issued by Proxy 105 to an identification triplet made of [Company_ID, Temp_ID1, OS_ID1].

With messages 209 and 210, the Company collaborative platform 111 may request to, and obtain from the Occupancy service 107, an occupancy status (such as to populate for example database 211) for all users (with an OS_ID) of Company collaborative platform 111. The initial occupancy status may be "unknown".

Turning now to Figure 2b, at step 221, User device 101 may start (through the 3^{rd} Party multimedia application 102) a multimedia stream with the 3^{rd} Party multimedia service 104 for User 100, and with message 222, start sending (through the Proxy 105) to the Occupancy service 107 on link 106 statistical and informational data related to streams on link 103.

Based on that statistical and informational data, the Occupancy service 107 may calculate an occupancy status, or a new occupancy status, as explained above, and with message 223, notify it in association with OS_ID1, to the Company collaborative platform 111.

At step 224, the Company collaborative platform 111 may update the Occupancy status in database 211. At steps 225 and 226, it may publish to Company collaborative client 113 and other user devices (not shown) this received occupancy status in association with User_ID1 for the benefit of the collaboration network composed of, for example, users working with User 100, and/or contacts of User 100, and interested in his/her occupancy status.

Going back to Figure 3, in relation to Figures 2a and 2b, the API 308 as seen there may consist in part or all of the following services:

### Getter:

- getOccupancyStatus(); return the full table of occupancy status for all users of Company having subscribed to the service provided by Occupancy service 107 (for example used in message 209)
- getOccupancyStatus(OS_ID); return occupancy status for the User 100 having the identification OS_ID
- getTemporaryId(Temp_ID); return a unique OS_ID for User 100 associated with a Temp_ID computed by the Company collaborative platform 111 (for example used in message 204)

### Setter:

- setOccupancyTable(table[typeOfStream;Occupancy]); to set the rules stored in Stream_occupancy DB 306 through link 314 to perform the processing of the occupancy status depending on the type of stream and according to the occupancy policy for a given Company or a User 100, etc.

### Notifiers:

- Notification(table[OS_ID, occupancy status]); to notify in real time any change occurring in the occupancy status of one or several users (for example used in message 223). Notification may be activated once a session has been initiated

### Access and Authentication:

- StartSession(Company_ID); the Company_ID is a unique identifier which has been provided securely (ex: using HTTPS) to the Company, for example when subscribing to the service with the provider of the Occupancy service 107. Subscription to the service may involve a dedicated portal (not shown). Once a session is started (for example at message 203), an authentication key may be returned (not shown) by the Occupancy service 107, to be embedded in headers of any subsequent requests to authenticate such requests and help back-end to associate them to the relevant Company.
- EndSession(); return nothing. End the session and invalidate current authentication key. A new StartSession request has to be issued in order to be able to send requests.

Turning now to Figure 4, a possible architecture is presented of a NN which may be used in the present technology. NN 302 may comprise two Convolutional Neural Networks (CNNs) and a Classifier with two linear layers that returns the most probable type of stream. Inbound statistics for the streams (of links 112 and 103 of Figure 1) may be present on link 309, and outbound statistics may be present on link 310.

A first CNN Layer may handle inbound and outbound statistics separately, and on each side:
- two CNNs (respectively 402-403 and 413-412) may work in parallel; each CNN has one ID input (respectively 309 and 310):
   - a first of the two CNNs (respectively 402, 412) may look for pattern detection. A choice may be made to have Kernel and Stride values of respectively 7 and 4, a BatchNormalization function, and a MaxPool function with an output size of 4. The output may be 60 channels to account for the larger number of possible pattern features;
   - a second of the two CNNs (respectively 403, 413) may seek to detect information related to local averages. A choice may be made to have Kernel and Stride values of respectively 9 and 4, a BatchNormalization function, and an AvgPool function with an output size of 4. The output may be 4 channels to account for a smaller number of possible average features.

A second CNN layer may aggregate this information and combine (pattern and average) features to generate a vector that represents both inputs 309 and 310, under the form of a CNN 404. CNN 404 may receive as inputs the 4- and 60-channel outputs from CNNs 402, 403, 412, 413. A choice may be made for CNN 404 to have Kernel and Stride values of respectively 3 and 1, a BatchNormalization function, and an MaxPool function with an output size of 1. The output may be 64 channels.

A Classifier 405 may comprise 2 linear layers that return one probability per type of stream, such that the most probable type of stream may be present on link 313. The Classifier 405 may have an input size of 128, and an output size of 64. The types of stream may be the same as in Table 2 above. Alternatively, they may be different, in which case some post-processing (not shown) may be added so that the type of stream information on link 313 is homogeneous with that present on link 312.

It will be apparent to the person skilled in the art that NNs with an architecture other than as depicted Figure 4 in relation to NN 302, may be used without affecting the generality of the teachings of the present disclosure. For example, the number of features, the Kernel size, the Stride or the number of blocks or layers of the NN may be modified without departing from the scope of the present technology. It will be equally apparent to the person skilled in the art that according to the present technology an encoder other than a NN may be used, even though the following description is presented using a NN as encoder.

Training of NN 302 may be performed with a large set dataset pre-labelled with a type of stream (ie: pre-classified), such as for example one of those in Table 2 above. Training may then consist in standard NN training procedure such as Gradient Backward Propagation. The training may be fit for all Companies subscribing to the Occupancy Service 107. Alternatively, training may be tailored to certain Companies depending for example on the particularities of the multimedia devices or hardware infrastructure they use. For example, a Company could still be using older Private Automatic Branch Exchanges (PABXs) that forward voice packets every 30mS, warranting specific NN training, when most Companies nowadays otherwise use PABXs that forward voice packets every 10mS.

Training data may consist in feeding NN 302 with pre-formatted statistics for windows of time for a known type of stream, for each of the inbound and outbound statistics. For example, for a sample of 10s duration, the training data may be of number of bytes per window of x mS (for example: 80mS, 200mS) pre-formatted as follows:

**Table 3: example of pre-formatted file used to train NN 303**

| **Time** | **Number of Inbound bytes/window of 80 mS** | **Number of Outbound bytes/window of 80 mS** | **Type of stream** |
|---|---|---|---|
| 20:39:32 | 675960 | 22634 | Streaming video |
| 20:39:33 | 193364 | 16654 | Streaming video |
| 20:39:33 | 817430 | 10598 | Streaming video |
| 20:39:34 | 400390 | 6056 | Streaming video |
| 20:39:35 | 207683 | 0 | Streaming video |
| 20:39:35 | 763994 | 21109 | Streaming video |
| 20:39:36 | 292329 | 23038 | Streaming video |
| 20:39:36 | 826524 | 13626 | Streaming video |
| 20:39:37 | 342086 | 31978 | Streaming video |
| 20:39:37 | 867785 | 16818 | Streaming video |
| 20:39:38 | 375720 | 9387 | Streaming video |
| 20:39:38 | 897716 | 6003 | Streaming video |
| 20:39:39 | 431548 | 2781 | Streaming video |
| 20:39:40 | 12617 | 4542 | Streaming video |
| 20:39:40 | 601806 | 0 | Streaming video |
| 20:39:41 | 134294 | 4542 | Streaming video |
| 20:39:41 | 924896 | 0 | Streaming video |
| 20:39:42 | 674932 | 0 | Streaming video |

Separate inbound and outbound statistics allowing NN 303 to extract information about combined (pattern and average) features on 2 separate streams, provide a better accuracy in type of stream recognition after training. It will be apparent to the person skilled in the art that statistics other than, or in addition to, numbers of bytes, may be used in association with respective types of stream. For example the size of data packets in streams may be used.

The large dataset pre-labelled with a type of stream (ie: pre-classified) may be collected for example during a campaign of monitoring user devices used by a number of users of multimedia applications, for example 12. For example the monitoring may be performed by a specific application (not shown) interconnected with "Wireshark" (https://www.wireshark.org/) engine components, and deployed on the user devices. The specific application may start and stop local recordings of data packets for streams across the network interface of the user devices, and label such recordings with a type of stream. The recordings may be stored in a database (not shown) used for training by NN 302. A number of about 10 recordings per type of stream as a training, already allows NN 302 with a structure as on Figure 4, to reach an operationally acceptable level of accuracy in predicting a type of stream.

This collecting may also allow to refine the granularity of the labels, beyond the types of stream, to the particular multimedia application(s) which generated such types of stream. NN 302 may thus also be trained to recognize multimedia applications used to generate types of stream, conferring to the Occupancy service 107 a finer processing capability.

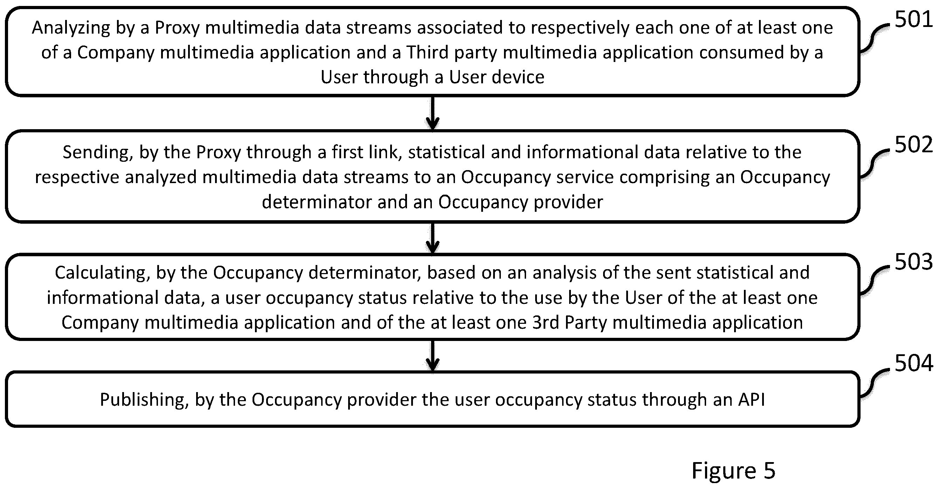

Figure 5 depicts a method that may be used in the present technology. At step 501, the Proxy 105 may be analyzing multimedia data streams associated to respectively each one of at least one of a Company multimedia application and a Third party multimedia application consumed by the User 100 through the User device 101. At step 502, the Proxy 105 may be sending, through the link 106, statistical and informational data relative to the respective analyzed multimedia data streams to the Occupancy service 107 comprising an Occupancy determinator 108 and an Occupancy provider 109. At step 503, the Occupancy determinator 108 may be calculating, based on an analysis of the sent statistical and informational data, a user occupancy status relative to the use by the User 100 of the at least one Company multimedia application and of the at least one 3rd Party multimedia application. At step 504, the Occupancy provider 109 may be publishing the user occupancy status through the API 308.

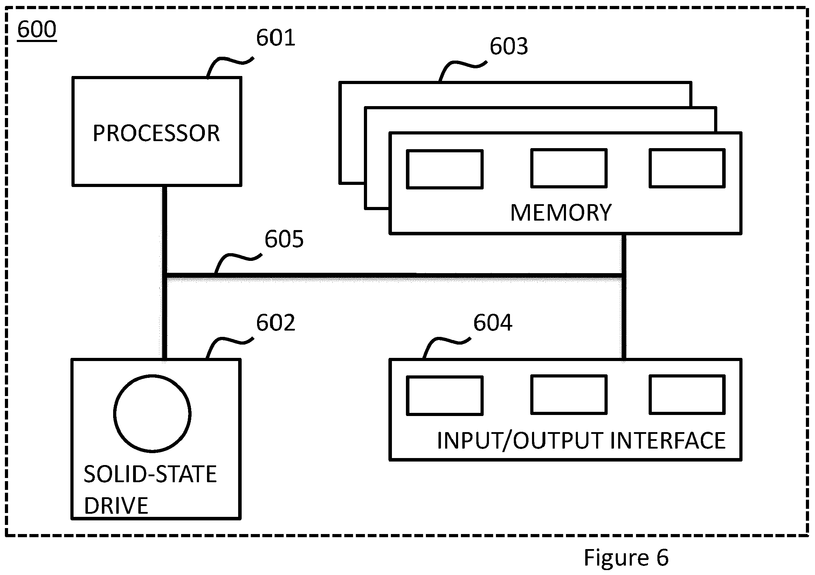

An example of implementation of respectively the User device 101, and/or the Proxy 105, and/or the Occupancy service 107, through a computing system 600, may be found in relation to Figure 6. As will be appreciated by the person skilled in the art, such computing system may be implemented in any other suitable hardware, software, and/or firmware, or a combination thereof, and may be a single physical entity, or several separate physical entities with a distributed functionality.

In some aspects of the present technology, the computing system 600 may comprise various hardware components including one or more single or multi-core processors collectively represented by a processor 601, a computer usable information storage medium such as a solid-state drive 602, another computer usable information storage medium such as a memory 603 and an input/output interface 604. In this context, the processor 601 may or may not be included in a FPGA. In some other aspects, the computing system 600 may be an "off the shelf' generic computing system. In some aspects, the computing system 600 may also be distributed amongst multiple systems. The computing system 600 may also be specifically dedicated to the implementation of the present technology. As a person in the art of the present technology may appreciate, multiple variations as to how the computing system 600 is implemented may be envisioned without departing from the scope of the present technology.

Communication between the various components of the computing system 600 may be enabled by one or more internal and/or external buses 605 (e.g. a PCI bus, universal serial bus, IEEE 1394 "Firewire" bus, SCSI bus, Serial-ATA bus, ARINC bus, etc.), to which the various hardware components are electronically coupled.

The input/output interface 604 may allow enabling networking capabilities such as wire or wireless access. As an example, the input/output interface 604 may comprise a networking interface such as, but not limited to, a network port, a network socket, a network interface controller and the like. Multiple examples of how the networking interface may be implemented will become apparent to the person skilled in the art of the present technology. According to implementations of the present technology, the solid-state drive 602 may store program instructions, such as those part of, for example, a library, an application, etc. suitable for being loaded into the memory 603 and executed by the processor 601 for the method and process steps according to the present technology.

While the above-described implementations have been described and shown with reference to particular steps performed in a particular order, it will be understood that these steps may be combined, sub-divided, or re-ordered without departing from the teachings of the present disclosure. At least some of the steps may be executed in parallel or in series. Accordingly, the order and grouping of the steps is not a limitation of the present technology. It should further be expressly understood that not all technical effects mentioned herein need to be enjoyed in each and every embodiment of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A system for calculating and sharing occupancy status of a User (100) consuming a Company multimedia application (113, 111) and a Third party multimedia application (102, 104) through a User device (101), the system comprising an Occupancy service (107) coupled to a Proxy (105), wherein the Proxy (105) is configured to:
- analyze multimedia data streams (112, 103) associated to respectively each one of the consumed multimedia applications; and
- send statistical and informational data relative to the respective analyzed multimedia data streams to the Occupancy service (107) through a first link (106);
and wherein the Occupancy service (107) comprises:
- an Occupancy determinator (108) configured to calculate, based on an analysis of the sent statistical and informational data, a user occupancy status relative to the use by the User (100) of the Company multimedia application and of the 3^{rd} Party multimedia application; and
- an Occupancy provider (109) configured to publish the calculated user occupancy status through an API (308).

2. The system of claim 1, wherein the User device (101) comprises:
- a Company collaborative client (113) configured to, when interfacing with a Company collaborative platform (111) through a second link (112), enable the User (100) to consume the Company multimedia application; and
- a 3^{rd} Party multimedia application (102) configured to, when interfacing with a 3^{rd} Party multimedia service (104) through a third link (103), enable the User (100) to consume the 3^{rd} Party multimedia application;
and wherein the Proxy (105) is further configured to analyze multimedia data streams transported respectively on the second (112) and the third (103) link.

3. The system of claim 1 or 2, wherein the Occupancy determinator (108) comprises a Detection method selector (301) configured to:
- analyze the sent statistical and informational data on the first link (106);
- select, based on the analyzing the sent statistical and informational data on the first link (106), at least one option in a set of options for inferring a type of stream for each of the respective analyzed multimedia data streams; and
- send the respective types of stream to a Stream-occupancy converter (305);
wherein the Stream-occupancy converter (305) is configured to convert the sent respective types of streams into the user occupancy status.

4. The system of claim 3, wherein the set of options comprises inferring the type of stream for each of the respective analyzed multimedia data streams by a trained Neural Network, NN (302), wherein the NN (302) is configured to be fed statistical data relative to respectively an inbound (309) and an outbound (310) stream for each of the respective analyzed multimedia data streams, wherein the NN (302) comprises:
- a first layer of two parallel Convolutional Neural Networks, CNNs, for the fed statistical data of each of the inbound (402-403) and the outbound (412-413) streams, a first of the two parallel CNNs being configured to detect features related to patterns of the fed statistical data, a second of the two parallel CNNs being configured to detect features related to average of the fed statistical data;
- a second layer (404) of one CNN configured to detect features related to a combination of patterns and average of the fed statistical data for both the inbound and the outbound streams; and
- a classifier (405) configured to associate a probability to each type of stream in a predetermined set of types of stream, and infer the type of stream by selecting the type of stream with the highest probability.

5. The system of claim 3 or 4, wherein the set of options further comprises inferring the type of stream for each of the respective analyzed multimedia data streams by a first Compare function (303), wherein the first Compare function (303) is configured to be fed informational data relative to each of the respective analyzed multimedia data streams, compare the fed informational data with a predetermined set of first criteria (304), and infer the type of stream by matching the fed informational data with the first criteria.

6. The system of any of the claim 3 to 5, wherein the Proxy (105) is configured to analyze the current status of multimedia elements on User device (101), and send status information relative to the multimedia elements through the first link (106), and wherein the set of options further comprises inferring the type of stream for each of the respective analyzed multimedia data streams by a second Compare function (303), wherein the second Compare function (303) is configured to be fed the status information relative to the multimedia elements, compare the status information relative to the multimedia elements with a predetermined set of second criteria, and infer the type of stream by matching the status information relative to the multimedia elements with the second criteria.

7. The system of any of the claims 3 to 6, wherein the Stream-occupancy converter (305) is configured to convert the sent respective types of streams into the user occupancy status by comparing the sent respective types of streams with a predetermined set of third criteria (306), and matching the sent respective types of streams with the third criteria (306).

8. The system of claim 7, wherein the predetermined set of third criteria (306) is updated through the API (308).

9. The system of any of the claims 2 to 8, wherein the API comprises at least:
- an Access and Authentication command configured to enable the Company collaborative platform (111) to start a session (203) with the Occupancy service (107) toward obtaining the calculated user occupancy status;
- a first Getter command configured to enable the Company collaborative platform (111) to request (204) of the Occupancy service (107) to return a unique OS_ID for the User (100) associated with a Temp_ID computed by the Company collaborative platform (111);
- a second Getter command configured to enable the Company collaborative platform (111) to request (209) of the Occupancy service (107) the calculated user occupancy status; and
- a Notifier command configured to enable the Occupancy service (107) to notify the Company collaborative platform (111) the calculated user occupancy status.

10. A Proxy (105) configured to:
- analyze multimedia data streams (112, 103) exchanged respectively between a Company collaborative client (113) of a User device (101) and a Company collaborative platform (111), and a Company multimedia application (113, 111) of the User device (101) and a Third party multimedia application (102, 104), associated to respective multimedia applications consumed by a User (100) using the User device (101);
- receive (207) from the Company collaborative platform (111) an identification (OS_ID) anonymously associated with the User (100); and
- send statistical and informational data relative to the respective analyzed multimedia data streams to an Occupancy service (107) in association with the received identification.

11. A method for calculating and sharing occupancy status of a User (100) consuming at least one Company multimedia application (113, 111) and at least one Third party multimedia application (102, 104) through a User device (101), the User device (101) comprising a Company collaborative client (113) configured to, when interfacing with a Company collaborative platform (111) through a second link (112), enable the User (100) to consume the Company multimedia application, and a 3^{rd} Party multimedia application (102) configured to, when interfacing with a 3^{rd} Party multimedia service (104) through a third link (103), enable the User (100) to consume the 3^{rd} Party multimedia application;
the method comprising:
- analyzing, by a Proxy (105), multimedia data streams (112, 103) transported respectively on the second (112) and the third (103) link and associated to respectively each one of the consumed multimedia applications;
- sending, by the Proxy (105) through a first link (106), statistical and informational data relative to the respective analyzed multimedia data streams to an Occupancy service (107), comprising an Occupancy determinator (108) and an Occupancy provider (109);
- calculating, by the Occupancy determinator (108), based on an analysis of the sent statistical and informational data, a user occupancy status relative to the use by the User (100) of the at least one Company multimedia application and of the at least one 3rd Party multimedia application; and
- publishing, by the Occupancy provider (109), the user occupancy status through an API (308).

12. The method of claim 11, wherein the Occupancy determinator (108) comprises a Detection method selector (301), the method further comprising:
- analyzing by the Detection method selector (301) the sent statistical and informational data on the first link (106);
- selecting by the Detection method selector (301), based on the analyzing the sent statistical and informational data on the first link (106), at least one option in a set of options for inferring a type of stream for each of the respective analyzed multimedia data streams; and
- sending by the Detection method selector (301), the respective types of stream to a Stream-occupancy converter (305); and
- converting by the Stream-occupancy converter (305) the sent respective types of streams into the user occupancy status.

13. The method of claim 12, wherein the set of options comprises inferring the type of stream for each of the respective analyzed multimedia data streams by a trained Neural Network, NN (302), wherein the NN (302) is configured to be fed statistical data relative to respectively an inbound (309) and an outbound (310) stream for each of the respective analyzed multimedia data streams, wherein the NN (302) comprises:
- a first layer of two parallel Convolutional Neural Networks, CNNs, for the fed statistical data of each of the inbound (402-403) and the outbound (412-413) streams, a first of the two parallel CNNs being configured to detect features related to patterns of the fed statistical data, a second of the two parallel CNNs being configured to detect features related to average of the fed statistical data;
- a second layer (404) of one CNN configured to detect features related to a combination of patterns and average of the fed statistical data for both the inbound and the outbound streams; and
- a classifier (405) configured to associate a probability to each type of stream in a predetermined set of types of stream, and infer the type of stream by selecting the type of stream with the highest probability.

14. The method of claim 12 or 13, wherein the set of options further comprises inferring the type of stream for each of the respective analyzed multimedia data streams by a first Compare function (303), wherein the first Compare function (303) is configured to be fed informational data relative to each of the respective analyzed multimedia data streams, compare the fed informational data with a predetermined set of first criteria (304), and infer the type of stream by matching the fed informational data with the first criteria.

15. The method of any of the claim 12 to 14, wherein the Proxy (105) is configured to analyze the current status of multimedia elements on User device (101), and send status information relative to the multimedia elements through the first link (106), and wherein the set of options further comprises inferring the type of stream for each of the respective analyzed multimedia data streams by a second Compare function (303), wherein the second Compare function (303) is configured to be fed the status information relative to the multimedia elements, compare the status information relative to the multimedia elements with a predetermined set of second criteria, and infer the type of stream by matching the status information relative to the multimedia elements with the second criteria.
